# EUROPEAN PATENT SPECIFICATION

(11) **EP 3 219 982 B1**
(45) Date of publication and mention of the grant of the patent: **26.08.2020**
(21) Application number: 16160119.0
(22) Date of filing: 14.03.2016
(51) Int. Cl.: F03D 13/20, F03D 80/80

(54) **DOOR FRAME OF A WIND TURBINE TOWER**
TÜRRAHMEN EINES WINDTURBINENTURMS
CADRE DE PORTE D'UNE TOUR DE TURBINE ÉOLIENNE

(43) Date of publication of application: 20.09.2017
(73) Proprietor: Siemens Gamesa Renewable Energy A/S, 7330 Brande (DK)
(72) Inventor: Shaik, Mujahid, 200120 Shanghai (CN)
(74) Representative: Aspacher, Karl-Georg

(56) References cited:
- EP-A1- 2 840 259
- WO-A1-2006/050723
- CN-A- 104 879 280
- DE-A1-102008 035 350

## Description

The invention relates to a door frame of a wind turbine tower.

Wind turbines comprise a rotor, a nacelle and a tower. The rotor is rotatable connected to the nacelle and the nacelle is rotatable connected to the tower.

The wind interacts with the rotor of the wind turbine. Due to the interaction, forces are introduced into the wind turbine. The forces lead to loads in the tower. The tower needs to be rigid enough to withstand the loads.

The tower of a wind turbine is often manufactured of steel. Cylindrical steel segments are combined to form the tower. The thickness of the segments is calculated accordingly, so that the tower can bear the loads.

Every opening in the tower wall weakens the rigidity of the tower. Openings in the tower wall are necessary to form an entrance into the tower, for example. In the case of a door opening, a door frame is introduced into the opening along the edge of the tower wall. The door frame reinforces the tower in the area of the door opening to compensate the weakening effect of the door opening. Examples of reinforced door frames in wind turbines are known from WO 2006/050723 A1,EP 2 840 259 A1 and DE 10 2008 035350 A1.

The door frame is often welded or bolted to the tower wall. The door frame is able to partially compensate the effect of the door opening, on the other hand it changes the distribution of loads in the tower wall.

Thus, the door frame shows the disadvantage that the stress in the tower wall increases in the area of the tower wall around the door opening. Thus, the parts of the tower wall in the area around the door opening are designed with an increased thickness, to compensate the higher stress levels. Thus the tower wall gets heavier and more expensive.

The aim of the invention is therefore to provide an advanced door frame that overcomes the drawback of the prior art.

The object of the invention is achieved by the independent claim 1. Further features of the invention are disclosed in the dependant claims.

A door frame arrangement of a wind turbine is disclosed, whereby at least a segment of a wind turbine tower comprises a tower wall of a certain predetermined thickness.

The tower wall comprises a through-going hole in the wall of the wind turbine tower as a door opening to allow the entrance into the tower. The tower comprises a frame that limits the clearance of the door opening. The frame leads along the edge of the hole in the tower wall to reinforce the tower and to compensate the loss of stability resulting from the opening in the tower wall.

The frame comprises a first part and a second part, whereby the first part of the frame abuts on the edge of the tower wall, and a second part limits the clearance of the door opening.

The thickness of the second part of the frame is bigger than the thickness of the first part of the frame and the thickness of the first part of the frame is bigger than the thickness of the tower wall.

Wind turbine towers are often made of metal. A wind turbine tower can be manufactured in one piece or it can be manufactured in several segments that are then connected to build a wind turbine tower.

The wind turbine tower carries the nacelle with the rotor of the wind turbine. The wind acts on the rotor of the wind turbine and induces forces into the nacelle and the tower. The forces are transferred over the tower into the foundation and the ground. Thus, the tower needs to shows a certain rigidity to be able to transfer the forces from the rotor and the nacelle of the wind turbine into the ground.

Therefore, the tower comprises a tower wall with a certain predetermined thickness, whereby the thickness of the material is predetermined in a way that the tower is capable of transferring the forces.

Often, an opening in the tower is needed to provide access to the interior of the tower for personnel or for the transportation of spare parts. An opening in the tower wall, cut into the tower wall as a through-going hole, changes the distribution of forces in the tower wall and thus weakens the tower wall.

The weakening effect of the opening in the tower needs to be compensated. This is often done by adding a door frame to the door opening in the wall of the wind turbine tower. A hole cut into a tower comprises leads to a surface of the tower material at its sides, that represents a cut through the tower mainly in radial direction with a width of the surface mainly equal to the thickness of the tower wall. The frame is connected to the wind turbine tower wall abutting on the radial surface of the edge of the hole in the tower wall. Thus, the frame covers the opening in the tower wall and leads from the inside of the tower to the outside of the tower.

The frame comprises a first part and a second part, whereby the parts show a certain thickness of the material they are made of. The thickness of the material is measured in a radial direction along the radius of the wind turbine tower.

The first part of the frame is arranged close to the edge of the tower wall that limits the hole in the tower wall. The second part of the frame is arranged next to the first part of the frame and limits the opening of the door in the tower wall.

The first part and the second part of the frame have a different thickness of the material they are made of. The thickness of the first part of the frame is bigger than the thickness of the tower wall.

The thickness of the second part of the frame is bigger than the thickness of the first part of the frame.

The first part of the frame is arranged next to the tower wall and the second part of the frame is arranged next to the first part of the frame in a serial manner to the first part. Thus there is a first change in the thickness of the material from the tower wall to the first part of the frame. Then there is a second change in the thickness from the first part of the frame to the second part of the frame before the second part of the frame limits the door opening in the tower wall.

The frame is attached to the tower wall in a way that forces can be transferred from the tower wall to the frame in the door opening and back into the tower wall. Thus, the tower wall influences the distribution of forces in the tower wall. Thus, the door frame compensates for the opening in the tower wall.

The influence of the door frame on the distribution of loads in the tower wall can lead to an uneven distribution of the loads. This can lead to high stress points in the tower wall close to the door opening.

The two parts of the frame with the different thickness of the material have a different influence on the distribution of the loads and the tower wall. Due to the difference and the thickness of the two frame parts, the loads and the tower wall are distributed more evenly and stress points with a higher aggregation of forces and loads in the tower wall can be avoided.

Areas with high loads and high stress points are problematic in a way that they lead to fatigue in the tower wall and reduce the lifetime of the material of the tower wall. Thus, a frame with parts of different thickness that lead to a more even distribution of the forces in the tower wall prolong the lifetime of the tower and reduce fatigue effects in the material of the tower.

The frame itself can be made of at least one block of material with areas of different thickness or can be formed out of at least two separate blocks of material with different thickness that are connected to form the frame.

The door frame comprises an area between the first part and the second part of the door frame where the thickness of the door frame increases at least partially in a continuous way from the thickness of the first part of the door frame to the thickness of the second part of the door frame.

A transient area is present in the door frame between the part with the first thickness and the part with the second thickness, where the thickness of the door frame is increased from the thickness of the first part to the thickness of the second part. The thickness is increased at least partially in a continuous way.

Edges and corners with a very small radius lead to a stress concentration in the material and thus lead to a higher fatigue in the door frame. By a transfer of the thickness at least partially in a continuous manner, thus with a higher radius, these stress concentration is avoided. A radius in this sense can be 5 mm or bigger for example.

Thus fatigue of the material can be reduced at the change of the thickness in the door frame.

The thickness of the frame changes in a stepwise manner from the first part to the second part.

The first part of the frame is less thick than the second part of the frame. The thickness changes from the first part of the frame to the second part of the frame in a step. The stepwise manner in the change of the thickness leads to an edge comprising a mainly radial surface in the frame between the first part of the frame and the second part of the frame.

A frame with a stepwise change in the thickness from the first part to the second part already is easier to be produced by forming or machining the material. Thus, production time and material is saved during the production of the door frame.

This can, for example, be a transition with a combination of a rounded inner edge and a more or less sharp outer edge.

The change in the thickness of the material from the first part to the second part might be achieved in a stepwise manner by one step. This is the easiest form to produce the door frame. Thus, the production process is simplified.

The change in the thickness of the door frame can also be achieved in more than one step, thus the load distribution in the tower wall and the reduction of fatigue in the frame is even more improved.

The tower wall of the wind turbine is of metal and the door frame is of metal.

Wind turbine towers are often produced of metal. Also, a combination of concrete towers and metal towers is common. Thus the base of a wind turbine tower can also be of concrete material.

The wall of the wind turbine tower is of metal and the frame of the door is also of metal. Thus, the frame of the door is of the same or an almost identical material as the tower, and provides for a more even distribution of forces in the tower wall.

The door frame is welded or bolted to the wall of the wind turbine tower.

The door frame needs to be connected to the tower wall in a way that forces can be transferred from the tower wall to the door frame.

The door frame can be welded to the tower wall, thus a ridged connection is formed between the door frame and the tower wall.

Also a bolted connection between the door frame and the tower wall provides a connection ridged enough to transfer forces from the wall to the frame and back.

Both, a welded and a bolted connection can be performed easily during the production of the tower or on side at the erection of the tower.

The thickness of the first part of the door frame is at least three times the thickness of the tower wall.

To compensate the loss of stability due to the opening in the tower wall, the door frame needs to show a certain rigidity to influence the distribution of loads and forces in the tower wall.

To achieve this goal, the thickness of the first part of the frame is at least three times the thickness of the tower wall. Thus, a good transfer of forces and a sufficient compensation of the negative effect of the door opening can be achieved.

The difference in the thickness of the first part of the door frame and the second part of the door frame is at least 30 mm.

To achieve the goal of a more even distribution of the forces in the tower wall, the first part of the frame and the second part of the frame need to have a different influence on the distribution of forces.

This is provided by a different rigidity of the frame parts. To achieve a different rigidity of the frame parts, the second part of the door frame is at least 30 mm thicker than the first part of the door frame.

The thickness of the first part of the door frame is at least 150 mm and the thickness of the second part of the door frame is at least 200 mm.

The wall of the wind turbine tower might have a thickness of 50 mm for example. The thickness of the first part of the frame is for example 150 mm.

The first part of the frame is connected to the tower wall at the edge of the opening. Thus, 50 mm of the thickness of the first part cover the 50 mm thickness of the tower. Thus, 100 mm of the thickness of the first part of the frame protrude over the tower wall into the one and / or the other direction, into the interior of the tower or to the outside of the tower.

The second part of the frame of the wind turbine tower is arranged next to the first part of the frame of the wind turbine tower. The second part of the door frame has a thickness of at least 200 mm. Thus, 50 mm of the thickness of the second part of the door frame protrude over the thickness of the first part of the frame. The 50 mm can protrude on one side of the first part of the frame or on both sides.

The width of the door frame measured in the direction of the clearance of the door opening is at least as big as the thickness of the tower wall.

The width of the door frame is the thickness of the material of the door frame and is measured in the direction of the clearance of the door opening. Thus, a wider frame would narrow the clearance of the door opening. To provide a stiffening effect for the tower, the door frame needs to show a certain width. The width of the door frame includes the door frame with the first and the second part of the frame.

The width of the door frame at one side of the door opening is at least as big as the thickness of the tower wall. Thus, the door frame can compensate for the effect of the door opening in the distribution of the forces in the wall of the wind turbine tower.

The width of the door frame is at least 50 mm.

The wall of the wind turbine tower might show a thickness of 50 mm of example. The width of the door frame shows at least the same thickness than the tower wall. Thus, the door frame is of a width of at least 50 mm.

The width of the door frame is between 80 mm and 130 mm.

A further increase in the width of the door frame leads to a stiffer door frame and thus to a more compensating effect regarding the effects of the door opening and the wall of the wind turbine tower.

An even higher increase in the width of the door frame leads to an incremental increase in the stiffness of the door frame but increases the need of material and thus increases the costs and the weight of the wind turbine.

Thus, a width of the door frame between 80 mm and 130 mm has proven the best effect.

The first and the second part of the door frame are physically separated parts and the first and the second part of the door frame are connected to each other in a way that forces are transferred between the two parts.

The first part and the second part of the door frame are connected together and the first part of the door frame is connected to the wall of the wind turbine tower. The connection is performed in a way that forces can be transferred from the wind turbine tower to the first part of the door frame and from the first part of the door frame to the second part of the door frame.

The connection can be achieved by welding or bolts for example.

Thus, the first and the second part of the door frame can assist in distributing the forces present in the wind turbine tower.

The first and the second part of the door frame are connected to each other at a surface that is arranged mainly in parallel to the direction of the thickness of the door frame.

The first part and the second part of the door frame are two separate parts that can be manufactured separately. The parts are then connected to form the door frame of the wind turbine tower.

The first part and / or the second part each comprise a certain predetermined width and a certain predetermined thickness, and can thus show in an easy case a rectangular cross-section.

Thus, separate parts are easy to manufacture.

The first part and the second part of the door frame are then connected together at a surface, whereby the surface is mainly in parallel to the thickness direction of the door frame and thus mainly in parallel to the radius of the wind turbine tower.

The contact surface between the first and the second part of the frame of the wind turbine tower is at least partially in parallel to the edge of the tower wall forming the door opening. The two parts are connected together and are connected to the tower wall to form the door frame in the door opening of the wind turbine tower.

The thickness of at least one part of the door frame varies along the length of the door frame.

The length of the door frame is seen as the extension leading along the edge of the wind turbine tower wall building the opening of the door.

The door frame is leading along the edge of the hole in the wind turbine tower. The length of the frame is the dimension leading along the edge of the hole.

The thickness of at least one part of the frame can vary along the length of the frame in a predetermined way. Thus, the frame can shows a different effect in distributing the forces in the wall of the wind turbine tower depending on the position of the frame along the edge of the hole.

Thus, for example, the rigidity of the door frame and thus the stiffening effect of the door frame can be increased by increasing the thickness of the door frame along the mainly vertical parts at the side of the door frame.

Depending on the distribution of forces and the tower and the need for a stiffening effect of the door frame, the parts of the door frame forming the upper or lower part of the door frame can be increased in thickness. Thus, a higher stiffening effect is achieved at a lower and upper part of the door frame.

The door frame comprises an oval or elliptical shape to avoid corners with the radius of less than 100 mm in the shape of the door frame along the edge of the tower wall.

Sharp edges in the door opening in the wall of a wind turbine tower are unwanted as they lead to an uneven distribution of forces in the tower and might lead to local maxima of loads in the tower wall of the wind turbine tower close to the door frame.

Especially corners with a radius of less than 100 mm need to be avoided.

Therefore, the hole in the tower wall and the door frame, and thus the door opening of the wind turbine tower, comprises an oval or elliptical shape with a minimum radius of 100 mm or more.

Thus, the door frame can contribute to a more equal distribution of the forces in the tower wall. In addition, local maxima with high loads in the tower wall in the area around the door opening are avoided.

The invention is shown in more detail by the help of figures. The figures show a preferred configuration and do not limit the scope of the invention.
FIG 1 shows a wind turbine tower with a door frame,
FIG 2 shows a cross-cut through the door frame of the wind turbine tower.

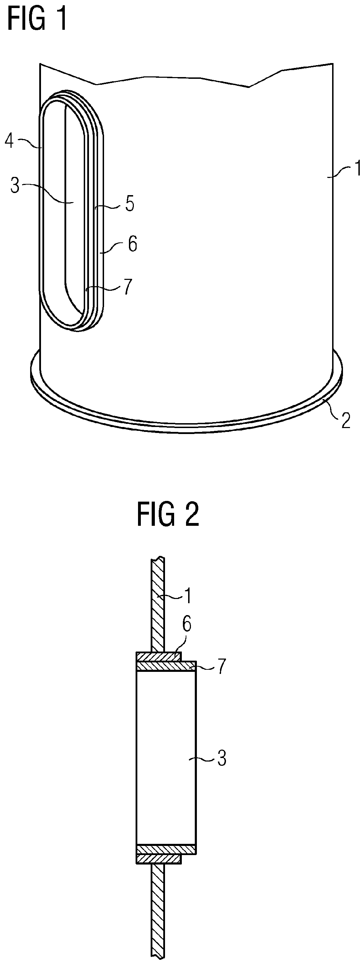

FIG 1 shows a wind turbine tower 1 with a door frame 4.

The wind turbine tower 1 can be manufactured out of wind turbine tower segments or as a whole tower in one.

The part of the wind turbine tower 1 shown in FIG 1 comprises a tower wall defining the outer surface of the tower 1. The tower segment 1 shown in FIG 1 comprises a flange 2 to connect the tower segment to a foundation or to another segment of a wind turbine tower.

To provide an access to the interior of the tower, the tower 1 comprises a door opening 3. The door opening 3 is achieved by cutting a hole into the wall of the tower 1.

An opening at the tower 1 weakens the structure of the tower. This effect is compensated by adding a door frame 4 to the tower 1. The door frame 4 in FIG 1 is leading along the edge of the hole in the tower 1. The door frame 4 is connected frontal to the surface of the cut in the tower wall of the tower 1.

The door frame 4 is connected to the tower 1 in a way that forces are transferred from the tower wall to the door frame. Thus, the door frame 4 changes the distribution of forces in a tower 1 close to the door opening 3.

To achieve a stiffening effect, the door frame 4 shows a certain thickness. The thickness of the door frame 4 is measured in radial direction along the radius of the tower 1.

The thickness of the door frame 4 in FIG 1 is changing in a stepwise manner. The doorframe 4 comprises a first part 6 and a second part 7 whereby the first part 6 comprises a lower thickness than the second part 7. The change of the thickness from the first part 6 to the second part 7 changes at a step 5.

The thickness can also change at least partially in a rounded manner, for example to avoid a sharp inner edge between the first and the second part.

The door frame 4 can be built out of at least one piece comprising material with different thickness. Thus, the first part 6 and the second part 7 are parts of one piece with a different thickness.

The frame 4 can also be built out of two separate pieces, whereby a first part 6 has a different thickness than the second part 7. The two different parts 6 and 7 are then connected together to form at least the part of the door frame 4.

The door frame 4 may comprise several segments along its circumference that are connected to form the shape of the doorframe 4, or the doorframe 4 can be manufactured with one piece of material leading along the circumference of the doorframe 4. The doorframe 4 is then connected to the tower whereby the doorframe is a abutting face-on to the cross-cut of the tower in the opening 3 in the tower wall 1.

FIG 2 shows a cross-cut through the door frame 4.

The tower 1 comprises a wall with a certain predetermined thickness. A door opening 3 is present in the wall of the tower 1. The doorframe 4 is divided into a first part 6 and a second part 7.

The thickness of the first part 6 is higher than the thickness of the tower wall 1. The thickness of the parts of the doorframe and the tower wall is measured in radial direction along the radius of the tower.

The thickness of the second part 7 of the doorframe 4 is even higher than the thickness of the first part 6 of the door frame 4.

The door frame with the part 6 and 7 is connected to the opening in the tower wall, whereby the door frame abuts on the cross-cut surface of the door opening 3 in the tower 1.

The door frame 4 is connected to the tower 1 in a way that forces are transferred from the tower 1 to the door frame 4 and back to the tower 1.

The thickness of the door frame 4, with the different thickness of the first part 6 and the second part 7, influences the distribution of forces in the tower 1 in the vicinity of the door frame 4 in a positive way. The distribution of forces is more evenly and areas with an accumulation of forces is avoided.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Door frame arrangement of a wind turbine tower,
- whereby at least a segment of a wind turbine tower (1) comprises a tower wall of a certain predetermined thickness,
- whereby the tower wall comprises a through-going hole in the wall of the wind turbine tower as a door opening (3) to allow the entrance into the tower,
- whereby the tower comprises a door frame (4) that limits the clearance of the door opening,
- whereby the door frame (4) leads along the edge of the hole in the tower wall to reinforce the tower (1) and to compensate the loss of stability resulting from the opening (3) in the tower wall,
**characterized in that**
- the door frame (4) comprises a first part (6) and a second part (7) connected to the first part (6), whereby the first part (6) of the door frame (4) abuts on the edge of the tower wall, and the second part (7) limits the clearance of the door opening (3),
- whereby the thickness of the second part (7) of the door frame (4) is bigger than the thickness of the first part (6) of the door frame (4), and the thickness of the first part (6) of the frame is bigger than the thickness of the tower wall (1), whereby the thickness of the material is measured in a radial direction along the radius of the wind turbine tower, and
- the thickness of the door frame (4) changes in a stepwise manner from the first part (6) to the second part (7).

2. Door frame arrangement according to claim 1, **characterized in that** the door frame (4) comprises an area between the first part (6) and the second part (7) of the door frame (4) where the thickness of the door frame (4) increases at least partially in a continuous way from the thickness of the first part (6) of the door frame (4) to the thickness of the second part (7) of the door frame (4).

3. Door frame arrangement according to one of the preceding claims, **characterized in that** the tower wall of the wind turbine tower (1) is of metal, and the door frame (4) is of metal.

4. Door frame arrangement according to claim 3, **characterized in that** the door frame (4) is welded or bolted to the wall of the wind turbine tower (1).

5. Door frame arrangement according to one of the preceding claims, **characterized in that** the thickness of the first part (6) of the door frame (4) is at least three times the thickness of the tower wall.

6. Door frame arrangement according to one of the preceding claims, **characterized in that** the difference in the thickness of the first part (6) of the door frame (4) and the second part (7) of the door frame (4) is at least 30 mm.

7. Door frame arrangement according to claim 6, **characterized in that** the thickness of the first part (6) of the door frame (4) is at least 150 mm and the thickness of the second part (7) of the door frame (4) is at least 200 mm.

8. Door frame arrangement according to one of the preceding claims, **characterized in that** the width of the door frame (4), measured in the direction of the clearance of the door opening (3), is at least as big as the thickness of the tower wall.

9. Door frame arrangement according to one of the preceding claims, **characterized in that** the width of the door frame (4) is at least 50 mm.

10. Door frame arrangement according to claim 9, **characterized in that** the width of the door frame (4) is between 80 mm and 130 mm.

11. Door frame arrangement according to one of the preceding claims, **characterized in that** the first (6) and the second (7) part of the door frame (4) are physically separated parts and the first (6) and the second (7) part of the door frame (4) are connected to each other in a way that forces are transferred between the two parts (6, 7) .

12. Door frame arrangement according to claim 11, **characterized in that** the first (6) and the second (7) part of the door frame (4) are connected to each other at a surface that is arranged mainly in parallel to the direction of the thickness of the door frame (4).

13. Door frame arrangement according to one of the preceding claims, **characterized in that** the thickness of at least one part (6, 7) of the door frame (4) varies along the length of the door frame (4).

14. Door frame arrangement according to one of the preceding claims, **characterized in that** the door frame (4) comprises an oval or elliptical shape to avoid corners with a radius of less than 100 mm in the shape of the door frame (4) along the edge of the tower wall.

## Patentansprüche

1. Türrahmenanordnung für einen Windturbinenturm,
- wobei zumindest ein Segment eines Windturbinenturms (1) eine Turmwand von einer bestimmten vorgegebenen Dicke umfasst,
- wobei die Turmwand des Windturbinenturms ein durchgehendes Loch als Türöffnung (3) umfasst, die Zutritt zum Turm gewährt,
- wobei der Turm einen Türrahmen (4) umfasst, der das lichte Maß der Türöffnung begrenzt,
- wobei der Türrahmen (4) am Rand des Lochs in der Turmwand entlang verläuft und so den Turm (1) verstärkt und den durch die Öffnung (3) in der Turmwand verursachten Stabilitätsverlust kompensiert,
**dadurch gekennzeichnet, dass**
- der Türrahmen (4) einen ersten Teil (6) und einen mit dem ersten Teil (6) verbundenen zweiten Teil (7) umfasst, wobei der erste Teil (6) des Türrahmens (4) am Rand der Turmwand anliegt und der zweite Teil (7) die lichte Breite der Türöffnung (3) begrenzt,
- wobei die Dicke des zweiten Teils (7) des Türrahmens (4) größer ist als die des ersten Teils (6) des Türrahmens (4) und die Dicke des ersten Teils (6) des Rahmens größer ist als die der Turmwand (1), wobei die Dicke des Materials in einer radialen Richtung entlang des Radius des Windturbinenturms gemessen wird, und
- sich die Dicke des Türrahmens (4) von dem ersten Teil (6) zum zweiten Teil (7) stufenweise ändert.

2. Türrahmenanordnung nach Anspruch 1, **dadurch gekennzeichnet, dass** der Türrahmen (4) zwischen seinem ersten Teil (6) und seinem zweiten Teil (7) einen Bereich umfasst, in dem sich seine Dicke zumindest teilweise auf kontinuierliche Weise von der Dicke des ersten Teils (6) des Türrahmens (4) auf die Dicke des zweiten Teils (7) des Türrahmens (4) erhöht.

3. Türrahmenanordnung nach einem der vorhergehenden Ansprüche, **dadurch gekennzeichnet, dass** die Turmwand des Windturbinenturms (1) und der Türrahmen (4) aus Metall besteht.

4. Türrahmenanordnung nach Anspruch 3, **dadurch gekennzeichnet, dass** der Türrahmen (4) an die Wand des Windturbinenturms (1) angeschweißt oder angeschraubt ist.

5. Türrahmenanordnung nach einem der vorhergehenden Ansprüche, **dadurch gekennzeichnet, dass** die Dicke des ersten Teils (6) des Türrahmens (4) mindestens das Dreifache der Dicke der Turmwand beträgt.

6. Türrahmenanordnung nach einem der vorhergehenden Ansprüche, **dadurch gekennzeichnet, dass** der Dickenunterschied zwischen dem ersten Teil (6) des Türrahmens (4) und dem zweiten Teil (7) des Türrahmens (4) mindestens 30 mm beträgt.

7. Türrahmenanordnung nach Anspruch 6, **dadurch gekennzeichnet, dass** die Dicke des ersten Teils (6) des Türrahmens (4) mindestens 150 mm und die Dicke des zweiten Teils (7) des Türrahmens (4) mindestens 200 mm beträgt.

8. Türrahmenanordnung nach einem der vorhergehenden Ansprüche, **dadurch gekennzeichnet, dass** die in Richtung des lichten Maßes der Türöffnung (3) gemessene Breite des Türrahmens (4) mindestens der Dicke der Turmwand entspricht.

9. Türrahmenanordnung nach einem der vorhergehenden Ansprüche, **dadurch gekennzeichnet, dass** die Breite des Türrahmens (4) mindestens 50 mm beträgt.

10. Türrahmenanordnung nach Anspruch 9, **dadurch gekennzeichnet, dass** die Breite des Türrahmens (4) zwischen 80 mm und 130 mm beträgt.

11. Türrahmenanordnung nach einem der vorhergehenden Ansprüche, **dadurch gekennzeichnet, dass** es sich bei dem ersten (6) und dem zweiten Teil (7) des Türrahmens (4) um physisch getrennte Teile handelt und der erste (6) und der zweite Teil (7) des Türrahmens (4) so miteinander verbunden sind, dass Kräfte zwischen den beiden Teilen (6, 7) übertragen werden.

12. Türrahmenanordnung nach Anspruch 11, **dadurch gekennzeichnet, dass** der erste (6) und der zweite Teil (7) des Türrahmens (4) an einer Fläche miteinander verbunden sind, die im Wesentlichen parallel zur Dickenrichtung des Türrahmens (4) angeordnet ist.

13. Türrahmenanordnung nach einem der vorhergehenden Ansprüche, **dadurch gekennzeichnet, dass** die Dicke mindestens eines Teils (6, 7) des Türrahmens (4) entlang der Länge des Türrahmens (4) variiert.

14. Türrahmenanordnung nach einem der vorhergehenden Ansprüche, **dadurch gekennzeichnet, dass** der Türrahmen (4) eine ovale oder elliptische Form aufweist, damit Ecken mit einem Radius von weniger als 100 mm bei der Form des Türrahmens (4) entlang des Rands der Turmwand vermieden werden.

## Revendications

1. Agencement de cadre de porte d'une tour d'éolienne,
- par lequel au moins un segment d'une tour d'éolienne (1) comprend une paroi de tour d'une certaine épaisseur prédéterminée,
- par lequel la paroi de tour comprend un trou traversant dans la paroi de la tour d'éolienne sous la forme d'une ouverture de porte (3) pour permettre l'entrée dans la tour,
- par lequel la tour comprend un cadre de porte (4) qui délimite le dégagement de l'ouverture de porte,
- par lequel le cadre de porte (4) passe le long du bord du trou dans la paroi de tour pour renforcer la tour (1) et pour compenser la perte de stabilité résultant de l'ouverture (3) dans la paroi de tour,
**caractérisé en ce que**
- le cadre de porte (4) comprend une première partie (6) et une seconde partie (7) reliée à la première partie (6), par lequel la première partie (6) du cadre de porte (4) est en butée sur le bord de la paroi de tour, et la seconde partie (7) délimite le dégagement de l'ouverture de porte (3),
- par lequel l'épaisseur de la seconde partie (7) du cadre de porte (4) est plus élevée que l'épaisseur de la première partie (6) du cadre de porte (4), et l'épaisseur de la première partie (6) du cadre est plus élevée que l'épaisseur de la paroi de tour (1), par lequel l'épaisseur du matériau est mesurée dans une direction radiale le long du rayon de la tour d'éolienne, et
- l'épaisseur du cadre de porte (4) varie d'une manière graduelle de la première partie (6) à la seconde partie (7).

2. Agencement de cadre de porte selon la revendication 1, **caractérisé en ce que** le cadre de porte (4) comprend une zone entre la première partie (6) et la seconde partie (7) du cadre de porte (4) où l'épaisseur du cadre de porte (4) augmente au moins partiellement d'une manière continue de l'épaisseur de la première partie (6) du cadre de porte (4) à l'épaisseur de la seconde partie (7) du cadre de porte (4).

3. Agencement de cadre de porte selon l'une des revendications précédentes, **caractérisé en ce que** la paroi de tour de la tour d'éolienne (1) est en métal et le cadre de porte (4) est en métal.

4. Agencement de cadre de porte selon la revendication 3, **caractérisé en ce que** le cadre de porte (4) est soudé ou boulonné sur la paroi de la tour d'éolienne (1).

5. Agencement de cadre de porte selon l'une des revendications précédentes, **caractérisé en ce que** l'épaisseur de la première partie (6) du cadre de porte (4) est au moins trois fois l'épaisseur de la paroi de tour.

6. Agencement de cadre de porte selon l'une des revendications précédentes, **caractérisé en ce que** la différence en termes d'épaisseur de la première partie (6) du cadre de porte (4) et de la seconde partie (7) du cadre de porte (4) est d'au moins 30 mm.

7. Agencement de cadre de porte selon la revendication 6, **caractérisé en ce que** l'épaisseur de la première partie (6) du cadre de porte (4) est d'au moins 150 mm et l'épaisseur de la seconde partie (7) du cadre de porte (4) est d'au moins 200 mm.

8. Agencement de cadre de porte selon l'une des revendications précédentes, **caractérisé en ce que** la largeur du cadre de porte (4), mesurée dans la direction du dégagement de l'ouverture de porte (3), est au moins aussi élevée que l'épaisseur de la paroi de tour.

9. Agencement de cadre de porte selon l'une des revendications précédentes, **caractérisé en ce que** la largeur du cadre de porte (4) est d'au moins 50 mm.

10. Agencement de cadre de porte selon la revendication 9, **caractérisé en ce que** la largeur du cadre de porte (4) est entre 80 mm et 130 mm.

11. Agencement de cadre de porte selon l'une des revendications précédentes, **caractérisé en ce que** la première (6) et la seconde (7) partie du cadre de porte (4) sont des parties physiquement séparées et la première (6) et la seconde (7) partie du cadre de porte (4) sont reliées l'une à l'autre d'une manière telle que des forces sont transférées entre les deux parties (6, 7).

12. Agencement de cadre de porte selon la revendication 11, **caractérisé en ce que** la première (6) et la seconde (7) partie du cadre de porte (4) sont reliées l'une à l'autre au niveau d'une surface qui est agencée principalement de manière parallèle à la direction de l'épaisseur du cadre de porte (4).

13. Agencement de cadre de porte selon l'une des revendications précédentes, **caractérisé en ce que** l'épaisseur d'au moins une partie (6, 7) du cadre de porte (4) varie le long de la longueur du cadre de porte (4).

14. Agencement de cadre de porte selon l'une des revendications précédentes, **caractérisé en ce que** le cadre de porte (4) présente une forme ovale ou elliptique pour éviter des coins avec un rayon de moins de 100 mm dans la forme du cadre de porte (4) le long du bord de la paroi de tour.
